# EUROPEAN PATENT SPECIFICATION

(11) **EP 2 959 159 B1**
(45) Date of publication and mention of the grant of the patent: **16.05.2018**
(21) Application number: 14714347.3
(22) Date of filing: 17.02.2014
(51) Int. Cl.: F03B 17/06

(54) **HYDROELECTRIC GENERATOR TO BE INSTALLED IN A WATER COURSE**
WASSERKRAFTWERK FÜR DIE INSTALLATION IN EINEM WASSERLAUF
GÉNÉRATEUR HYDROÉLECTRIQUE À ÊTRE INSTALLÉ DANS UN COURS D'EAU

(30) Priority: 18.02.2013 IT MI20130217
(43) Date of publication of application: 30.12.2015
(73) Proprietor: Neglenco S.r.l., 23900 Lecco (LC) (IT)
(72) Inventor: CINQUE, Gledis, 23900 Lecco (IT)
(74) Representative: Marietti, Andrea
(86) International application number: PCT/IB2014/059043
(87) International publication number: WO 2014/125449

(56) References cited:
- FR-A1- 2 505 937
- JP-A- 2004 052 736
- US-A- 6 132 172
- US-A1- 2012 076 656
- US-B1- 7 633 174

## Description

The present invention relates to a hydroelectric generator adapted to be installed in a water course, of the type having a semi-submerged rotor. Semi-submerged rotor means that the rotor blades are only in part submerged in the water course.

In particular, the present invention relates to a hydroelectric generator adapted to be installed in rivers wherein the water flows at a low speed.

As known, a hydraulic generator is a machine converting the kinetic energy of a fluid into electric energy, usually by means of an alternator driven by a rotor which is rotated, in its turn, by the fluid operating on the rotor itself. Moreover, it is known that the kinetic energy transferred to the machine is proportional to the mass and to the square of the speed of the fluid intercepted by the rotor. It is therefore apparent that, if water courses have moderate flow speeds of the fluid, the kinetic energy the machine can obtain considerably decreases. To overcome this drawback, it is possible to operate on the other above-mentioned parameter of the kinetic energy, that is the fluid mass the rotor intercepts.

A first method of increasing this parameter consists in totally immersing the rotor, preferably anchoring the generator on the water course bed. This solution ensures that a larger rotor surface contacting the fluid, but is very complex to design, install and maintain. In fact, there are portions of the machine which have to work always submerged, that is in an adverse environment. Furthermore, to ensure that the generator with submerged rotor is functional, the machine has to be installed in a position of the river, particularly on the river bed, where the rotor can be totally submerged in safety conditions. Moreover, such a machine largely interferes with the water course. Being these machines expensive and not very adaptable, they cannot be used in low-speed water courses.

To overcome these drawbacks, it is known to produce hydroelectric generators adapted to be installed in water courses wherein the rotor blades are designed for being semi-submerged, i.e. only partially immersed in water. In such cases the generator structure is usually fixed to one or both banks of the water course itself.

Therefore, if the rotor cannot be completely immersed, in order to increase the fluid mass intercepted by the rotor of an electric generator, the machine size has to be increased, and particularly the size of the blades designed to intercept the fluid flow. As apparent to a field technician, the size increase results in a large generator bulk in the water course, in particular in a transverse direction with respect to the water course itself. Moreover, a machine with semi-submerged rotor of large size also involves a high noise of the generator. Finally, the size increase causes the expensiveness of the machine, that is moreover difficult to install, manage and maintain.

It should be noted, in more detail, that the use of a rotor with blades designed to be semi-submerged and having a quite large size, involves that an even low misalignment of the rotor with respect to the main flow direction of the fluid results in lower efficiency of the hydroelectric generator and in a high noise of the latter. Hydroelectric generators with rotors freely floating in a water course are discussed in US7633174 and FR2505937; another movable generator is shown in JP2004052736.

It is an object of the present invention to provide a hydroelectric generator with a semi-submerged rotor allowing high power to be generated with a relatively low bulk. It is another object of the present invention to provide a hydroelectric generator with a semi-submerged rotor operating at low noise. It is a further object of the present invention to provide a hydroelectric generator with a semi-submerged rotor which can be used in water courses with low flow speed of fluid.

The present invention achieves these and other objects providing a hydroelectric generator according to claim 1. Preferred aspects are set forth in the independent claims.

According to the invention, a hydroelectric generator as per claim 1 is provided. Thanks to this solution it is possible to simply and effectively modify the angle of incidence of the rotor means when they come into contact with the fluid, therefore optimizing the machine efficiency in function of the several operative situations possible for the generator. A hydroelectric generator with higher efficiency can obtain a high power from a water course while limiting its size.

Therefore, the present invention allows to contain the manufacturing and management costs of the machine, so that it becomes advantageous to install it even in rivers having low flow speeds of the water.

The adjusting means provide a controlled movement. As better explained in the detailed description, it is possible to apply a closed-loop control, that is to say by detecting the operating data and acting on the adjusting means to arrange the rotor means in their highest efficiency position. However, it is possible to perform even an open-loop control, according to which the adjusting means can be driven in a controlled way so as to arrange the rotor means in the supposed highest efficiency position.

Furthermore, by limiting the rotor size, the noise of the hydroelectric generator is in its turn advantageously limited.

According to one aspect of the present invention, the rotor means can be provided with at least one blade having a profile extending in a substantially spiral shape along the axis of said rotor.

According to another aspect of the present invention, the fixed platform can comprise means for stably anchoring it to the ground.

According to another aspect of the present invention, the blade is made at least in part of a substantially flexible material. As better explained below, this aspect provides the rotor of the present invention with a greater versatility of use. According to another aspect of the present invention, the at least two degrees of freedom can comprise the distance of the rotor of said rotor means from said fixed platform. According to the present invention, the at least two degrees of freedom comprise the adjustment of the ratio between the volume of the rotor portion of said rotor means submerged in said fluid and the volume of the rotor portion not submerged in said fluid.

According to another aspect of the present invention, the hydroelectric generator can comprise adjusting means to adjust the position of the fixed platform in parallel with respect to the main flow direction of the water.

According to another aspect of the present invention, the hydroelectric generator can comprise adjusting means to adjust the height and/ or inclination of said fixed platform with respect to the ground.

It is further described a process for converting the kinetic energy of the water of a water course in electric energy as per claim 8. According to another aspect of the present invention, the step of adjusting the position of the rotor means can comprise adjusting the distance of the rotor from the fixed platform.

According to the present invention, the step of adjusting the position of the rotor means comprises adjusting the ratio between the volume of the portion of the rotor submerged in the fluid and the volume of the rotor portion not submerged in the fluid.

According to another aspect of the present invention, the process described above can comprise adjusting the height and/ or inclination of the fixed platform with respect to the ground.

According to a further aspect of the present invention, the process described above can comprise adjusting the position of the fixed platform with respect to the main flow direction of the water.

Further characteristics and advantages of the present invention will be more evident from the following description, made for illustration purposes only and without limitation, with reference to the attached drawings, wherein:
- figure 1 is a schematic front view of an embodiment of a hydroelectric generator according to the present invention;
- figure 2 is a schematic plan view of the generator of figure 1;
- figure 3 is a schematic front view of an alternative embodiment of a hydroelectric generator according to the present invention;
- figure 4 is a schematic plan view of the hydroelectric generator of figure 3;
- figure 5 is a schematic view of a rotor blade of the hydroelectric generator of figure 3 coming in the water.
- figure 6 is a schematic front view of a further embodiment of a hydroelectric generator according to the present invention;
- figure 7 is a schematic plan view of a further embodiment of the present invention.

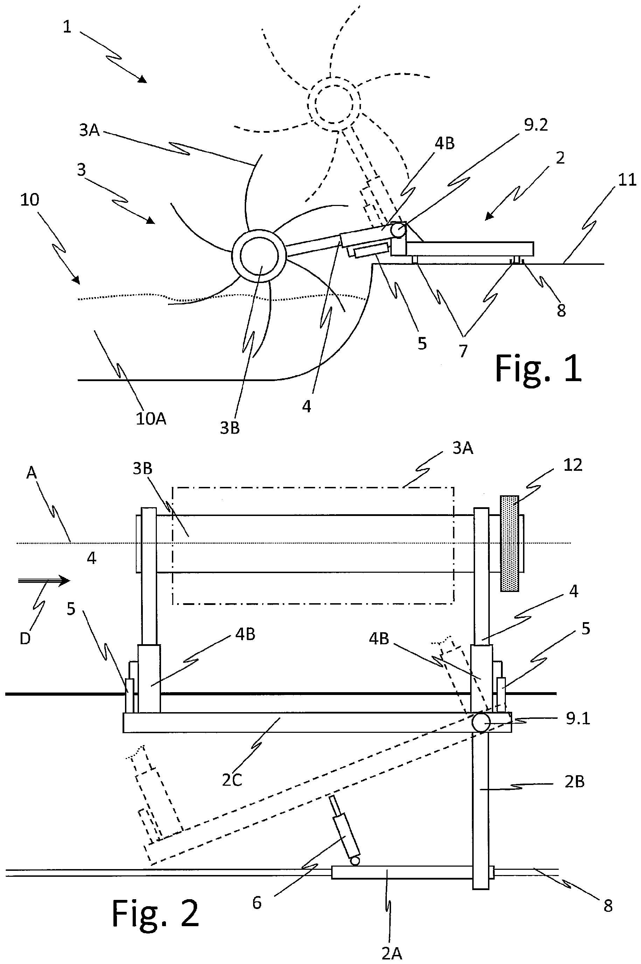

Referring to figures 1 and 2, a hydroelectric generator 1, hereinafter generator 1, consists of a fixed platform 2, for constraining the generator 1 to the ground 11 and rotor means 3 for converting the kinetic energy of a fluid 10A, hereinafter water 10A, of a water course 10. The platform 2 is a structure adapted to stably anchor the machine to the ground and, at the same time, to support the rotor means 3 and to counteract the forces acting on the rotor means 3 themselves.

In the embodiment shown in figures, the structure consists of a set of beam elements 2A, 2B e 2C even if, as clear, different structure shapes are possible. The generator 1 comprises means 4, 5, 6 for adjusting the position of the rotor means 3, constrained to the fixed platform 2. The adjusting means 4, 5, 6 provide the rotor means 3 with at least one degree of freedom. In particular, the adjusting means 4, 5, 6 allow to change at least the orientation of the axis A of the rotor means 3 with respect to the main flow direction D of the water 10A. To carry on this function, several kinematic systems are known in the art. In the shown embodiment, the rotor means 3 are rotationally integral with the beam element 2C, thus being rigidly rotatable around the pin 9.1. A jack 6 is hinged to the beam element 2A such as to control the rotation of the beam element 2C and the rotor means 3.

Other moving means can be constrained to the fixed platform 2 therefore providing the rotor means 3 with further degrees of freedom.

In the embodiment shown herein, in particular, transverse positioning means 4, 4B and safety means 5 are shown.

The transverse positioning means 4, 4B allow the adjustment of the distance of the rotor means 3 with respect to the fixed platform 2 such that the transverse position of the rotor means in the water course 10 is optimized. In the shown embodiment, the supporting elements 4 can slide inside sleeves 4B which are constrained to the fixed platform 2.

The safety means 5 allow the adjustment of the ratio between the volume of the rotor portion submerged in the water 10A and the volume of rotor portion not submerged in the water 10A. Further, the safety means 5 allow to completely remove the rotor means 3 from the water course 10, in case of malfunctions or in case of maintenance. In the shown embodiment, the safety means 5 consist of jacks 5 having one end constrained to the fixed platform 2 and the other end constrained to the sleeves 4B. The sleeves 4B are rotatable around the pin 9.2 with respect to the fixed platform 2. Controlling the jacks 5 is therefore possible to rotate the sleeve 4B, and accordingly the rotor means 3, around the pin 9.2. In figure 1 the dotted line illustrates the position of the rotor means 3 when completely removed from the water course 10. The means herein described are an example of the several kinematic systems known in the art, able to move the rotor means 3 in a similar manner. It is apparent that kinematic systems able to move the rotor means 3 in a similar manner, different from what described, are provided and fall within the object of the present invention.

In an embodiment, the fixed platform 2 can further comprise means 7, 8 able to provide the fixed platform 2 itself with additional degrees of freedom, even if with a short travel. In particular, the height of the platform 2 can be adjusted with respect to the ground thanks to proper rise means 7. Moreover, the rise means 7 can be adjusted independently from one another, whereby it is possible to adjust the rise means 7 at heights different from one another. Thanks to this solution, the inclination of the fixed platform 2 can be adjusted with respect to the ground 11 and, accordingly, it is possible to provide a further adjusting parameter of the position of the rotor 3 with respect to the water.

Further, or alternatively, the fixed platform 2 can be constrained along one (or more) rail 8 to allow the adjustment of the position of the fixed platform 2, and therefore of the generator 1, in parallel to the main flow direction D of the water 10A.

The rotor means 3 consist of a hub 3B and a rotor or propeller, composed of one or more blades 3A. The hub 3B is rotationally constrained to the fixed platform 2 and in particular, in the embodiment shown herein, the hub 3B is rotationally constrained to the supporting elements 4.

The hub is made of materials providing a good balance between durability and lightness.

Stainless steel alloys proved to be particularly effective for the purpose.

One or more blades 3B forming, as mentioned, actually the rotor itself, are keyed to the hub 3B. The blades 3A can be arranged in various shapes. In addition to the traditional helical shape, such as for example that found in motorboats, the blade profile can extend along the axis A of the rotor means 3 so that the main dimension of the blade 3A is right that in the direction of the axis A itself. Thanks to this solution, the surface of the water 10A the single blade 3A intercepts, is considerably increased.

The use of blades 3A made at least in part of a substantially flexible material, proved to be particularly advantageous for this arrangement.

The term "substantially flexible material" means a material able to be deformed without suffering from breakages, so that the profile of the blade 3A can be defined upon its assembly on the hub 3B. In other words, thanks to its flexibility the final shape, i.e. the already warped shape, of the blade 3A is not obtained during manufacturing, but it is deformed and moulded directly along the hub 3B upon the assembly of the blade 3A thereon.

For example, the blade 3A can be advantageously made of fabric or cloth of a composite material. For example, fabrics made of composite materials based on carbon or polyester yarns proved to be particularly suitable for the present invention. In particular, a polyester-polyarylate fiber, known in the art as Vectran®, has proved to be particularly suitable for the invention.

However, it is clear that different materials have the characteristic of "flexibility" as defined above. For example, the use of particularly light metal alloys which can be easily moulded and warped along the profile of a hub 3B to shape a blade 3A, is also possible.

The flexible material provides the blade 3A with several advantages.

As above mentioned, the blade 3A can be shaped more loosely compared with the conventional propeller, which is rather formed according to a predetermined shape. In particular, by using clothes or composite fabrics, it is possible to eliminate any type of working intended to predefine (or pre-warp) the profile of the blade 3A, because it can be easily bent and shaped according to the desired shape, also after the last working performed during the manufacturing step of the blade itself.

Further, the use of heavy materials is reduced. As a result, the inertia of the rotor 3 is greatly reduced since it is a function of the mass, as known, and therefore of the weight, of the materials making up the rotor 3 itself.

Moreover, the rotor 3 can comprise tensioning means to tension the portion of blade 3A made of flexible material.

A further solution is to provide a multi-stage rotor assembly, that is a sequence of several propellers along the axis A, of the mentioned type used in motorboats and/or of the bucket type, similarly to that used in the aviation turbine and/or other types of propeller having the dimension along the axis A of the rotor means 3 shorter than the other two.

Therefore, in figure 2, one of the possible sizes of an axially-extending blade assembly or a multiple-stage rotor assembly is generally traced.

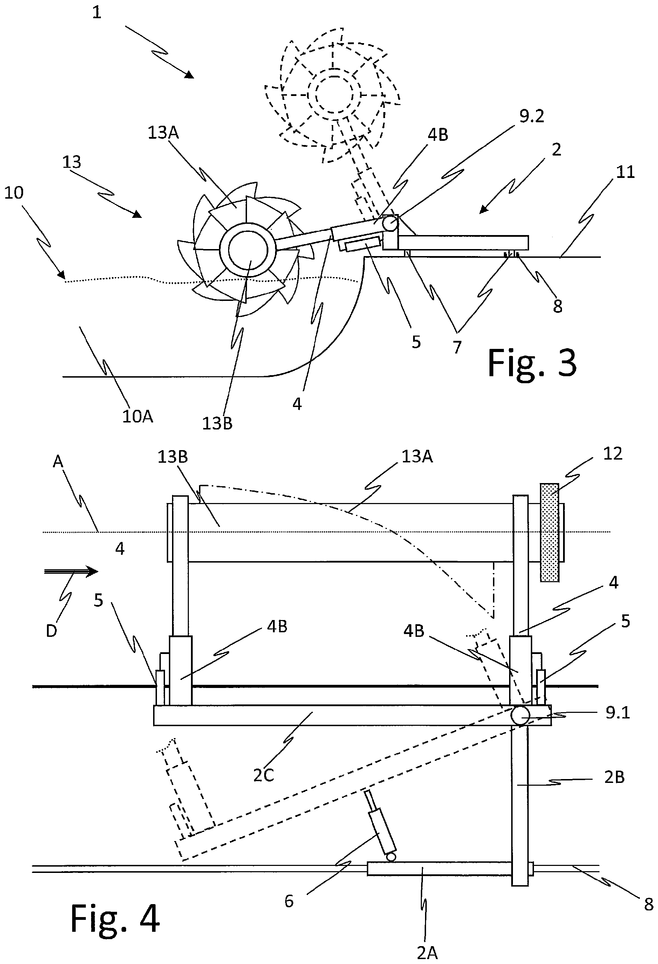

An alternator 12 is connected in a known way to the hub 3B such as to convert the mechanical energy provided by the rotation of the hub 3B itself in electric energy. Referring to figures 3 - 5, a particularly advantageous characteristic embodiment is now described. Figures 3 and 4 are representations according to views similar to the views of figures 1 and 2 of the previously described embodiment. The same alphanumeric references have been associated to similar elements.

Compared to the embodiment of figures 1 and 2, in this embodiment the rotor means 13 have a particular shape. In more details, the rotor means 13 are provided with one or more blades 13A, preferably made of a flexible material as previously defined, keyed on the hub 13B, having a profile extending spirally along the axis A of the rotor means 13. In figure 4, for sake of clearness, the profile of a single blade 13A is shown. To further help to understand the development of the blade 13A, the warping of the blade 13A itself has been increased along the axis A with respect of the illustration of figure 1. In particular, thanks to such an illustration, it could be noted that the size of the radius of the blade 13A increases substantially continuously between the two ends of the blade 13A itself from a minimum value R1, that could even be null, and a maximum value R2.

Variations, not shown, are possible. For example, the blade can extend helically, with a substantially constant radius along the axis A, or have hybrid shapes, where the development of the blade only partially extends spirally along the axis A of the rotor means.

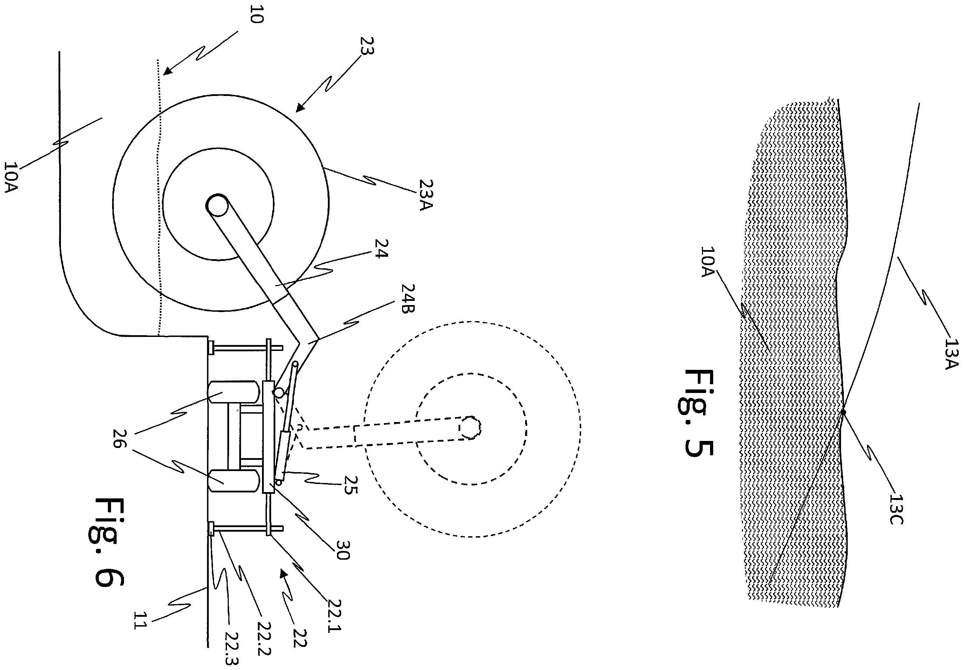

Thanks to the spiral shape, the blade 13A comes in the water in a "scissor-like" mode, i.e. the outer edge of the blade 13A comes in the water 10A point by point. Such a characteristic is schematically shown in more detail in figure 5, where it can be seen that the outer edge of the blade has only one point 13C of contact with the water 10A. As evident, the point 13C can displace along the outer edge of the blade 13A as a function of the rotation of the blade 13A itself.

This solution allows to drastically reduce the noise of the rotor means 13 when these come in contact with the water. A low value, null in the limit, of radius R1 allows to reduce, if not eliminate, the elements arranged orthogonally to the flow direction D of the water 10A. This characteristic allows to reduce the possibility that foreign bodies are stranded at the blades 13A of the rotor means 13 of the generator 1 according to the present embodiment.

Moreover, in this embodiment, the adjustment of the axis A of the rotor means 13 with respect to the main flow direction D of the water 10A allows to vary the efficiency more accurately and remarkably with respect to the general embodiment of figures 1 - 2, whereby rotor means 13 with spiral-shaped blades proved to have a higher efficiency.

From the above treatise, the operation of a generator 1 according to the present invention becomes clear. At first, the fixed platform 2 has to be installed on the edge of the water course 10. Once the fixed platform is fixed to the ground, the rotor means 3, 13 are inserted in the flow of the water course 10. Then, one or more adjusting means 4, 4B, 5, 6, 7, 8 whose the machine is provided with, are operated such that the generator 1 is positioned in the position of highest efficiency with respect to the flow of the water 10A. Such adjusting operations can be manual, automatic or a combination thereof. In particular, the machine can be provided with controlling means, able to monitor the operative condition of the generator 1 and to control the operations of one or more adjusting means 4, 4B, 5, 6, 7, 8, to permanently keep the generator 1 in the condition of highest efficiency.

In figure 6, an alternative embodiment of the present invention is shown, wherein the fixed platform 22 can comprise movable means 30, for example in the form of a hook-lift trailer. In particular, the movable means 30 are provided with wheels 26 or the like, which provide the movable means 30 and, accordingly, the members connected to them, i.e. the further elements of the fixed platform 22 and the rotor 23, with degrees of freedom.

In more detail, first adjustable elements 22.1 are constrained so as to axially slide with respect to the movable means 30. In other words, the first adjustable elements 22.1 are telescopically constrained with respect to the movable means 30. Second adjustable elements 22.2 are in turn slidingly constrained to the first adjustable elements 22.1 in a substantially orthogonal way. In other words, the second adjustable elements 22.2 can slide along an axis inclined with respect to the first adjustable elements 22.1 with the inclination angle preferably close to 90°.

The fixed platform 22 can engage with, or disengage from, the ground 11 thanks to the movement of the second adjustable means 22.2. In particular, the second adjustable elements 22.2 end with fastening means 22.3 adapted to stably engage and anchor the structure to the ground 11. Before engaging with the ground 11, the distance of the second adjustable elements 22.2 with respect to the movable means 30 can be adjusted in order to optimize the stability of the fixed platform 22 and to find the best point of the ground 11 where the contact with the ground 11 itself has to be carried out.

Rotor means 23, provided with a general propeller 23A shaped in accordance with one of the previously described embodiments, are constrained to the movable means 30 with at least one degree of freedom.

In more detail, similarly to the above described embodiments, it is possible to change the ratio between the volume of the rotor portion of the rotor means 23 submerged in the water 10A and the volume of the rotor portion not submerged in the water. For example, the rotor means 23 can be hinged to the movable means 30. Safety means 25, similar to the safety means 5 present in the above illustrated embodiments, can control the rotation of the rotor means 23 and possibly control the complete removal of the rotor means 23 from the water 10A in case of malfunctions, as shown by the dotted line in figure 6.

Further, as in the previous embodiments, the supporting elements 24 of the rotor means 23 can slide inside sleeves 24B to adjust the distance of the rotor means 23 from the fixed platform 22.

If a change in the position of the fixed platform 22 with respect to the main flow direction of the water 10 is required, as allowed by the rail 8, and/or an adjustment of the orientation of the rotor means 22 is required, as allowed by the jack 6, it will be necessary to disengage the fixed platform 22 from the ground 11 and to operate on the movable means 30.

In particular, it will be necessary to disengage the fastening means 22.3 and to lift the second adjustable means 22.2. Then the rotor means 23 can be displaced and oriented with respect to the flow of the water 10A in the water course 10 by connecting the movable means 30 to a tractor means, for example a truck body.

It is also possible to provide the structure with balance weights, not shown in figures, able to balance the weight of the rotor means 23 such that stability of the fixed platform 22 with respect to the ground 11 is increased.

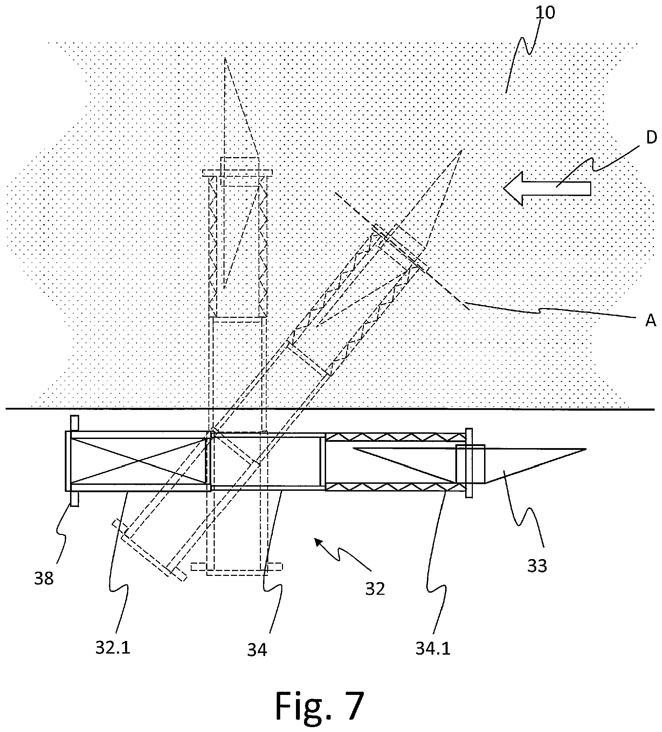

According to a further embodiment of the invention, shown in figure 7, the fixed platform 32 is oriented such that, in a rest position, the plan projection of the rotor means 33 is at least in part, and preferably completely as in figure 6, outside the water course 10.

The fixed platform comprises a base 32.1 and telescopic rods 34 which can be retracted in the base 32.1.

Supports 34.1 for rotor means 33 are constrained to the telescopic rods 34. In figure, the length of the rotor means 33 is short for illustrative purposes.

The supports 34.1 are preferably lattice-shaped to give strength and lightness to the structure.

The base 32.1 comprises adjusting means to change the orientation of the axis of the rotor means 33 with respect to the main flow direction D of the water.

In particular wheels 38, or the like, move the base 32.1 or anyway the fixed structure 32 with respect to the ground.

Thanks to the present embodiment, the rotor means 33 can be operated manually also after the arrangement of the fixed structure 32 on the ground, because an operator can access them directly from the ground.

Two possible operative conditions of the hydroelectric generator 31 after a rotation of the platform 32 are shown in dotted lines.

## Claims

1. Hydroelectric generator (1) adapted to be installed in a water course (10), having a semi-submerged rotor, comprising a fixed platform (2), rotor means (3, 13) for the conversion of kinetic energy of a fluid (10A) in electric energy, **characterized by** comprising adjusting means (4, 4B, 5, 6) to adjust the position of the rotor means (3, 13), said adjusting means (4, 4B, 5, 6) to adjust the position being constrained to said fixed platform (2), and moving, in a controlled way, said rotor means (3, 13) with respect to said fixed platform (2) with at least two degrees of freedom; a first degree of freedom to change at least the orientation of the axis (A) of the rotor of said rotor means (3, 13) with respect to the main flow direction (D) of the water (10A) in said water course (10), and a second degree of freedom to adjust the ratio between the volume of the rotor portion of said rotor means (3, 13) submerged in said fluid (10A) and the volume of the rotor portion not submerged in said fluid (10A).

2. Hydroelectric generator (1) according to claim 1, wherein said rotor means (3, 13) are provided with at least one blade (3A, 13A) having at least in part a spiral development profile along the axis (A) of said rotor means.

3. Hydroelectric generator (1) according to claim 2, wherein said blade is made at least in part of a substantially flexible material.

4. Hydroelectric generator (1) according to one of the preceding claims, wherein said fixed platform (2) comprises means for its stable anchoring to the ground.

5. Hydroelectric generator (1) according to one of the preceding claims, wherein said at least two degrees of freedom comprise the distance (4, 4B) of the rotor of said rotor means (3, 13) from said fixed platform (2).

6. Hydroelectric generator (1) according to one of the preceding claims, comprising adjusting means (7) to adjust the height and/ or inclination of said fixed platform (2) with respect to the ground.

7. Hydroelectric generator (1) according to one of the preceding claims, comprising adjusting means (7, 8) to adjust the position of said fixed platform (2) in parallel to the main flow direction of the water (10A) in said water course (10).

8. Process for converting the kinetic energy of the water (10A) of a water course (10) in electric energy, by means of a hydroelectric generator (1) provided with rotor means (3, 13) for the conversion of kinetic energy of a fluid (10A) in electric energy that are moved, with at least two degrees of freedom, by respective adjusting means (4, 4B, 5, 6) to adjust the position with respect to a fixed platform (2) to which said adjusting means (4, 4B, 5, 6) to adjust the position are constrained, said process comprising the steps of:
a. stably installing said fixed platform (2);
b. adjusting, in a controlled way, the position of said rotor means (3, 13) of said hydroelectric generator at least for orienting the rotor axis of said rotor means (3, 13) with respect to the flowing water and for arranging said rotor means in a position semi-submerged with respect to said fluid, wherein said step of adjusting the position of said rotor means (3, 13) comprises adjusting (5) the ratio between the volume of the portion of said rotor submerged in said fluid (10A) and the volume of the rotor portion not submerged in said fluid (10A).

9. Process according to claim 8, wherein said step of adjusting the position of said rotor means (3, 13) comprises adjusting the distance (4, 4B) of said rotor from said fixed platform (2).

10. Process according to one of claims 8 to 9, further comprising adjusting (7) the height and/ or inclination of said fixed platform (2) with respect to the ground.

11. Process according to one of claims 8 to 10, further comprising adjusting the position of said fixed platform (2) with respect to the main flow direction of the water in said water course (10).

## Patentansprüche

1. Hydroelektrischer Stromerzeuger (1) angepasst, um in einem Wasserlauf (10) angebracht zu werden, mit einem halbeingetauchten Rotor, enthaltend eine feststehende Plattform (2), eine Rotoreinrichtung (3, 13) zur Umwandlung der kinetischen Energie eines Fluids (10A) in elektrische Energie, **dadurch gekennzeichnet, dass** er Einstellmittel (4, 4B, 5, 6) aufweist, um die Stellung der Rotoreinrichtung (3, 13) einzustellen, wobei die die Stellung einstellenden Einstellmittel (4, 4B, 5, 6) an der feststehenden Plattform (2) befestigt sind und auf gesteuerte Weise die Rotoreinrichtung (3, 13) in Bezug auf die feststehende Plattform (2) mit mindestens zwei Freiheitsgraden bewegen; einem ersten Freiheitsgrad, um mindestens die Ausrichtung der Achse (A) des Rotors der Rotoreinrichtung (3, 13) in Bezug auf die Hauptströmungsrichtung (D) des Wassers (10A) in dem Wasserlauf (10) zu verändern, und einem zweiten Freiheitsgrad, um das Verhältnis zwischen dem Volumen des Anteils des Rotors der Rotoreinrichtung (3, 13), der in dem Fluid (10A) eingetaucht ist, und dem Volumen des Anteils des Rotors, der nicht in dem Fluid (10A) eingetaucht ist, anzupassen.

2. Hydroelektrischer Stromerzeuger (1) gemäß Anspruch 1, wobei die Rotoreinrichtung (3, 13) mit mindestens einer Schaufel (3A, 13A) versehen ist, die mindestens teilweise ein spiralförmiges Entwicklungsprofil entlang der Achse (A) der Rotoreinrichtung aufweist.

3. Hydroelektrischer Stromerzeuger (1) gemäß Anspruch 2, wobei die Schaufel zumindest teilweise aus einem im Wesentlichen flexiblen Material gefertigt ist.

4. Hydroelektrischer Stromerzeuger (1) gemäß irgendeinem der vorhergehenden Ansprüche, wobei die feststehende Plattform (2) Mittel für ihre stabile Verankerung im Boden umfasst.

5. Hydroelektrischer Stromerzeuger (1) gemäß irgendeinem der vorhergehenden Ansprüche, wobei die mindestens zwei Freiheitsgrade den Abstand (4, 4B) des Rotors der Rotoreinrichtung (3, 13) von der feststehenden Plattform (2) umfasst.

6. Hydroelektrischer Stromerzeuger (1) gemäß irgendeinem der vorhergehenden Ansprüche, mit einer Einstelleinrichtung (7) zum Einstellen der Höhe und/oder der Neigung der feststehenden Plattform (2) in Bezug auf den Boden.

7. Hydroelektrischer Stromerzeuger (1) gemäß irgendeinem der vorhergehenden Ansprüche, mit Einstellmitteln (7, 8) zum Einstellen der Stellung der feststehenden Plattform (2) parallel zur Hauptströmungsrichtung des Wassers (10A) in dem Wasserlauf (10).

8. Verfahren zur Umwandlung der kinetischen Energie des Wassers (10A) eines Wasserlaufs (10) in elektrische Energie mittels eines hydroelektrischen Stromerzeugers (1), der mit einer Rotoreinrichtung (3, 13) zur Umwandlung der kinetischen Energie eines Fluids (10A) in elektrische Energie versehen ist, die mit mindestens zwei Freiheitsgraden durch jeweilige Einstellmittel (4, 4B, 5, 6) bewegt wird, um die Stellung in Bezug auf eine feststehende Plattform (2) einzustellen, an der die Einstelleinrichtung (4, 4B, 5, 6) zum Einstellen der Stellung befestigt ist, wobei das Verfahren die folgenden Schritte umfasst:
a. stabiles Installieren der feststehenden Plattform (2);
b. gesteuertes Einstellen der Stellung der Rotoreinrichtung (3, 13) des hydroelektrischen Stromerzeugers mindestens zum Ausrichten der Rotorachse der Rotoreinrichtung (3, 13) in Bezug auf das fließende Wasser und zum Anordnen der Rotoreinrichtung in einer Stellung, die bezüglich der Flüssigkeit halb eingetaucht ist, wobei der Schritt des Einstellens der Stellung der Rotoreinrichtung (3, 13) das Einstellen (5) des Verhältnisses zwischen dem Volumen des Anteils des in das Fluid (10A) eingetauchten Rotors und dem Volumen des Anteils des Rotors umfasst, der nicht in das Fluid (10A) eingetaucht ist.

9. Verfahren gemäß Anspruch 8, wobei der Schritt des Einstellens der Stellung der Rotoreinrichtung (3, 13) das Einstellen des Abstandes (4, 4B) des Rotors von der feststehenden Plattform (2) umfasst.

10. Verfahren gemäß irgendeinem der Ansprüche 8 bis 9, weiterhin umfassend das Einstellen (7) der Höhe und/oder der Neigung der feststehenden Plattform (2) in Bezug auf den Boden.

11. Verfahren gemäß irgendeinem der Ansprüche 8 bis 10, weiterhin umfassend das Einstellen der Stellung der feststehenden Plattform (2) in Bezug auf die Hauptströmungsrichtung des Wassers in dem Wasserlauf (10).

## Revendications

1. Générateur hydroélectrique (1) adapté pour être installé dans un cours d'eau (10), ayant un rotor à demi immergé, comprenant une plateforme fixe (2), des moyens de rotor (3, 13) pour la conversion de l'énergie cinétique d'un fluide (10A) en énergie électrique, **caractérisé en ce qu'**il comprend des moyens d'ajustement (4, 4B, 5, 6) pour ajuster la position des moyens de rotor (3, 13), lesdits moyens d'ajustement (4, 4B, 5, 6) pour ajuster la position étant contraints sur ladite plateforme fixe (2), et déplaçant, d'une manière commandée, lesdits moyens de rotor (3, 13) par rapport à ladite plateforme fixe (2) avec au moins deux degrés de liberté ; un premier degré de liberté pour changer au moins l'orientation de l'axe (A) du rotor desdits moyens de rotor (3, 13) par rapport à la direction d'écoulement principale (D) de l'eau (10A) dans ledit cours d'eau (10), et un deuxième degré de liberté pour ajuster le rapport entre le volume de la portion de rotor desdits moyens de rotor (3, 13) immergée dans ledit fluide (10A) et le volume de la portion de rotor non immergée dans ledit fluide (10A).

2. Générateur hydroélectrique (1) selon la revendication 1, dans lequel lesdits moyens de rotor (3, 13) sont pourvus d'au moins une aube (3A, 13A) ayant au moins en partie un profil de développement en spirale le long de l'axe (A) desdits moyens de rotor.

3. Générateur hydroélectrique (1) selon la revendication 2, dans lequel ladite aube est composée au moins en partie d'un matériau sensiblement flexible.

4. Générateur hydroélectrique (1) selon l'une des revendications précédentes, dans lequel ladite plateforme fixe (2) comprend un moyen pour son ancrage stable au sol.

5. Générateur hydroélectrique (1) selon l'une des revendications précédentes, dans lesdits au moins deux degrés de liberté comprennent la distance (4, 4B) du rotor desdits moyens de rotor (3, 13) par rapport à ladite plateforme fixe (2).

6. Générateur hydroélectrique (1) selon l'une des revendications précédentes, comprenant un moyen d'ajustement (7) pour ajuster la hauteur et/ou l'inclinaison de ladite plateforme fixe (2) par rapport au sol.

7. Générateur hydroélectrique (1) selon l'une des revendications précédentes, comprenant des moyens d'ajustement (7, 8) pour ajuster la position de ladite plateforme fixe (2) parallèlement à la direction d'écoulement principale de l'eau (10A) dans ledit cours d'eau (10).

8. Processus pour convertir l'énergie cinétique de l'eau (10A) d'un cours d'eau (10) en énergie électrique, à l'aide d'un générateur hydroélectrique (1) pourvu de moyens de rotor (3, 13) pour la conversion de l'énergie cinétique d'un fluide (10A) en énergie électrique qui sont déplacés, avec au moins deux degrés de liberté, par des moyens d'ajustement (4, 4B, 5, 6) respectifs pour ajuster la position par rapport à une plateforme fixe (2) sur laquelle sont contraints lesdits moyens d'ajustement (4, 4B, 5, 6) pour ajuster la position, ledit processus comprenant les étapes de :
a. installation stable de ladite plateforme fixe (2) ;
b. ajustement, d'une manière commandée, de la position desdits moyens de rotor (3, 13) dudit générateur hydroélectrique au moins pour orienter l'axe de rotor desdits moyens de rotor (3, 13) par rapport à l'eau en écoulement et pour agencer lesdits moyens de rotor dans une position à demi immergée par rapport audit fluide, dans lequel ladite étape d'ajustement de la position desdits moyens de rotor (3, 13) comprend l'ajustement (5) du rapport entre le volume de la portion dudit rotor immergée dans ledit fluide (10A) et le volume de la portion de rotor non immergée dans ledit fluide (10A).

9. Processus selon la revendication 8, dans lequel ladite étape d'ajustement de la position desdits moyens de rotor (3, 13) comprend l'ajustement de la distance (4, 4B) dudit rotor par rapport à ladite plateforme fixe (2).

10. Processus selon l'une quelconque des revendications 8 à 9, comprenant en outre l'ajustement (7) de la hauteur et/ou l'inclinaison de ladite plateforme fixe (2) par rapport au sol.

11. Processus selon l'une quelconque des revendications 8 à 10, comprenant en outre l'ajustement de la position de ladite plateforme fixe (2) par rapport à la direction d'écoulement principale de l'eau dans ledit cours d'eau (10).
